# EUROPEAN PATENT APPLICATION

(11) **EP 4 730 166 A1**
(43) Date of publication of application: **22.04.2026**
(21) Application number: 24206914.4
(22) Date of filing: 16.10.2024
(51) Int. Cl.: G06F 21/31, G06N 20/00

(54) **METHOD, SYSTEM, AND COMPUTER PROGRAMME FOR USER BEHAVIOURAL ANALYSIS**

(71) Applicant: Naukowa i Akademicka Siec Komputerowa Panstwowy Instytut Badawczy, 01-045 Warszawa (PL)
(72) Inventor: KRZYSZTON, Mateusz, 05-850 Duchnice (PL); LIS, Kamila, 04-394 Warszawa (PL)
(74) Representative: Markieta, Jaroslaw Franciszek

(57) **Abstract**

A user (41) behaviour analysis system in the form of user (41) interactions with an end device (12), comprising an input module (43) that receives signals from the end device's (12) sensors (42) during user (41) interactions with end device (12), a memory module (14) that records sensor (42) signals during user (41) interactions with end device (12), a comparison module (44) that uses a pre-trained machine learning model (30), and an output module (46) that provides the response from the comparison module (44). The system is characterised in that the comparison module (44) uses a pre-trained machine learning model (30) that responds to a set of signals from the sensors (42) of the device (12) during the interaction of the user (41) with the end device, representing at least two interactions (I, G) of the user (41) with the end device (12), to generate a response in the form of a similarity metrics (P) between interactions (I, G); furthermore, the comparison module (44) contains a pre-trained machine learning model (30) which is a machine learning model trained on interactions originating from a closed group of end device users (12) other than the current end user (41).

## Description

The subject of the invention is a method, system, and computer programme for analysing user behaviour on electronic devices, specifically a method of verifying the identity of a user of an end device with a user interface, operating at least partially on the user's electronic device, such as a smartphone, tablet, personal computer, laptop, etc.

In the current state of the art, various methods are known for supporting the authentication process through user behavioural analysis components. Classification systems are known that allow the distinction between real users and computer software impersonating users, as well as behavioural analysis systems that identify specific characteristics of a given user, enabling identity determination based on these traits.

US10581977B2 discloses an authentication mechanism using a uniquely assigned private IP address and network authentication data issued as part of a VPN certificate exchange. The first authentication layer creates a secure tunnel between the user and the VPN server, while the second authentication layer links this secure tunnel to a website or resource without requiring the transfer of the VPN certificate. After authentication, interactions between the website or resource and the user are automatically monitored for unusual or malicious behaviour. An automatic verification and authentication response is generated as needed. This system continuously identifies and verifies the website user's identity based on prior authentication as well as hardware and behavioural characteristics. Behavioural identification relies on the proximity of current behaviour to both the user's own and others' historical patterns.

DE102020007082A1 discloses a passive authentication method that, in response to a requested action from the first user, retrieves a sensor data set and categorises data from the first sensor within the sensor data set to the first modality in a range of modalities. The method includes determining a distance value for the first modality of the set by applying a first modality model to the data from the first sensor and comparing it with the first verified value of the first user for the first modality. The method involves, based on a comparison, determining the first authentication decision for the distance value. The method includes, in response to an initial authentication decision indicating that the first sensor's data corresponds to the first user, executing the requested action. The behavioural verification system activates when a user attempts an action, using sequential or weighted checks to match behaviour against a gallery of behaviours. Either individual models ("online") or a pre-trained shared model ("offline") are used.

In the current state of the art, there remains an unresolved issue regarding the protection of end users' privacy when their interactions are analysed by behavioural analysis systems. Signals representing users' interactions with end devices are often sent to central servers without user consent or awareness, or such consent is required to use the system. Both approaches put the user in a position of being compelled to share behavioural information.

To address this, the invention proposes a system where user behavioural information either remains within the end device or its transmission is significantly restricted.

The invention is defined by the Patent Claim No. 1.

The core of the invention is a system for analysing user behaviour through interactions with an end device, consisting of an input module that captures signals from the device's sensors during user interactions with the end device, a memory module that records sensor signals during user interactions with the end device, a comparison module using a pre-trained machine learning model, and an output module providing the comparison module's response. The system according to the invention is characterised by a comparison module that uses a pre-trained machine learning model to respond to a set of sensor signals from the end device during user interactions with the end device, representing at least two interactions of the user with the end device, to produce a response in the form of an interaction similarity measure; furthermore, the comparison module includes a pre-trained machine learning model, trained on interactions from a closed group of end device users other than the user currently using the system.

Preferably, the system according to the invention is characterised in that the interactions of a closed group of users, used to pre-train the machine learning model, are recorded in an environment that isolates the task or end device's impact from the effect of the user's behavioural traits on their interaction with the end device.

Preferably, the system according to the invention is characterised in that the input module receiving signals from the end device's sensors during user interaction with the end device receives various signals from multiple sensors of the end device and creates a multimodal representation in the form of a data set generated from these signals, with the pre-trained machine learning model being a multimodal model.

Preferably, the system according to the invention is characterised in that the set of user interactions to which the comparison module responds includes the user's current interaction and at least one previous interaction, and the comparison module generates a similarity measure between the user's current interaction and at least one previous interaction of the end user.

Preferably, the system according to the invention is characterised in that the pre-trained machine learning model responding to a set of user interactions is safeguarded from inspection or modification by camouflage mechanisms or source code encryption.

Preferably, the system according to the invention is characterised in that the signals from the end user's interactions with the end device are represented as data generated from the end device's sensors signals.

Preferably, the system according to the invention is characterised in that the end device sensors are selected from a group comprising a keyboard, mouse, capacitive or resistive touchscreen, accelerometer, magnetometer, and thermometer.

The essence of the invention also includes a method for behavioural analysis of user behaviour in the form of user interactions with the end device, comprising steps in which signals from the end device's sensors during user interaction with the end device are received, signals from the end device's sensors during user interaction with the end device are recorded, the signals from the sensors are compared using a pre-trained machine learning model during user interaction with the end device to generate a response, and the response from the comparison module is provided. The method according to the invention is characterised by a comparison module that uses a pre-trained machine learning model to respond to a set of sensor signals from the end device during user interactions with end device, representing at least two interactions of the user with the end device, to generate a response in the form of an interaction similarity metrics; furthermore, the comparison module includes a pre-trained machine learning model trained on interactions from a closed group of end device users, excluding the current end user.

Preferably, the method for behavioural analysis of user behaviour according to the invention is characterised in that the steps of the method are carried out using the system according to the invention, with the user behaviour analysis system in the form of user interactions with the end device being run on the end device.

Preferably, the method for behavioural analysis of user behaviour according to the invention is characterised in that the steps of the method are carried out using the system according to the invention, with the user behaviour analysis system in the form of user interactions with the end device being equipped with communication modules that establish a communication channel between the end device and the central system, where either the input module receiving signals from the end device's sensors during user interaction or the memory module recording signals from the end device's sensors during user interaction is run on the end device, while the comparison module is run on the central system, with the input module adapted to transmit signals from the end device's sensors during user interaction with end device to the central system, and the output module adapted to provide the response from the comparison module on the set of user interactions to the end device.

Preferably, the method for behavioural analysis of user behaviour according to the invention is characterised in that the steps of the method are carried out using the system according to the invention, with the user behaviour analysis system in the form of user interactions with the end device being equipped with communication modules that establish a communication channel between the end device and the central system, and the input module that receives signals from the end device's sensors during user interaction with the end device, the memory module that records signals from the end device's sensors during user interaction, and the comparison module are all run on the end device, while the pre-trained machine learning model used by the comparison module is transmitted to the end device from the central system prior to the comparison module's operation in the process of behavioural analysis of the user.

The essence of the invention also includes a computer programme containing instructions that, when executed by a computer, cause the computer to perform the steps of the method according to the invention.

An advantage of the method and system according to the invention is that behavioural personal data of the end user is not transmitted outside the user's end device. The use of a pre-trained universal machine learning model for identifying a user who did not participate in the creation of the comparison model allows the process of developing the comparison model to be separated from its use in user identification. Observations show that the comparison model, trained on a closed group of users according to the invention, can detect similarities between successive interactions of a new user - i.e., a user whose interactions were not part of the model's creation - and differentiate them from those of other individuals. The method and system according to the invention limit the proliferation of personal data, reduce network traffic, and retain desired parameters for reliable user identification.

The invention is further illustrated in a favourable embodiment through the following figures, where:
- Fig. 1: schematically represents a preferred embodiment of the system according to the invention,
- Fig. 2: schematically represents the machine learning model used in the invention,
- Fig. 3: schematically represents a preferred embodiment of the method according to the invention.

The following description of the embodiments of the invention uses the following definitions of terms that help understand the principle of the invention.

End devices are electronic telecommunication devices used by one or more users, containing a user interface and a set of measurement sensors that allow measurement of user interactions with the device. Examples of end devices include smartphones, tablets, personal computers, laptops, etc.

End device sensors are sensors that respond directly or indirectly to changes in the measured physical parameter, generating a signal that reflects changes in that parameter over time. Sensors can measure parameters such as the speed of typing successive letters of the login and password, the location and speed of finger movement on a touchscreen, acceleration, geographic position, or changes in the geographic position of the device. Examples of end device sensors include those selected from a group comprising a keyboard, mouse, capacitive or resistive touchscreen, accelerometer, magnetometer, or thermometer.

A signal is understood as the changes over time in the values of the physical parameters measured by the end device's sensor. Signals are measured, converted from analogue to digital form, and recorded by the end device. They may also take the form of data derived from the end device's sensor signals, such as aggregated values, time derivatives, correlations, or signal similarities.

User interaction I is understood as a single session encompassing a defined process of the user's interaction with the end device over time.

An interaction gallery is understood as a set of recorded interactions attributed to a single user. The symbol G represents a set of historical interactions containing at least one entry. In embodiments, the interaction gallery can also be represented in aggregated form as an averaged interaction or by an interaction selected from the gallery based on utility criteria; for example, the gallery may be represented by the historical interaction most similar to the current interaction, or by an interaction selected based on historical criteria, such as the last interaction. The interaction gallery may also be represented by an aggregated interaction derived from a selective choice of historical interactions. In this context, historical interaction G may take any of the forms described above.

Modality is understood as an individual characteristic specific to the end device user within the scope of their behaviour.

A machine learning model is a set of parametrized algorithms that utilise parameters automatically established during the learning process from training samples.

A static machine learning model is the resulting model where the learning process has been completed, meaning all model parameters are fixed. The model remains unchanged during use.

A closed group of users refers to a group of end device users of fixed size, where no user rotation occurs. User rotation is understood as the possibility of users joining or leaving the group. A closed group of users may be selected in advance from a larger pool of individuals or may be selected from the current pool of end device users.

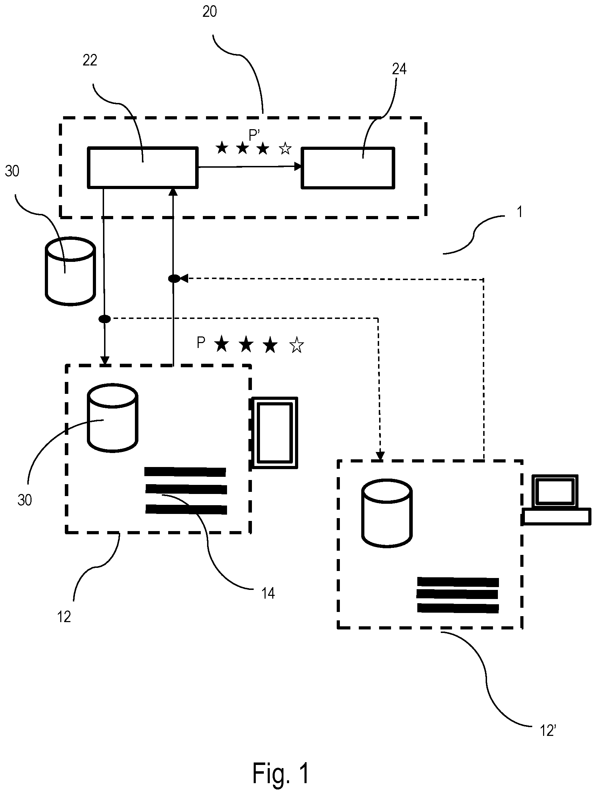

Figure 1 shows a schematic of an example embodiment of the system according to the invention, representing a type of light behavioural analysis system (without transmitting end user-identifying data to the server).

System 1 shown in Figure 1 includes software 10 run on the end device 12, 12' of the user; the end device 12, 12' is, as defined above, an electronic telecommunication device used by one or more users, containing a user interface and a set of measurement sensors that enable the measurement of user interactions with the device. Examples of end devices include smartphones, tablets, personal computers, laptops, etc.

The end device 12, 12' is adapted to establish a standard communication channel with the software 20 running on the server side, where the communication channel can be either an open or encrypted channel. This communication channel is adapted to transmit a pre-trained machine learning model 30 from the server to the end device 12, 12', which responds to a set of signals from the device's 12, 12' sensors during the user's interaction with the end device 12, 12'. The software 10 running on the end device 12, 12' includes an input module that receives signals from the device's sensors during user interaction with end device 12, 12', a memory module 14 that records the device's sensor signals during user interaction, a comparison module that uses the pre-trained machine learning model 30, and an output module that provides the response P of the comparison module to signals representing the user's interaction with the end device 12, 12'.

In a preferred embodiment of the invention illustrated in Figure 1, the comparison module uses the pre-trained machine learning model 30, which responds to a set of signals from the end device's sensors during user interaction with the end device 12, 12' representing at least two interactions of the user with the end device - namely, the current interaction and at least one historical interaction recorded in the memory module. Preferably, the comparison module comprises a pre-trained machine learning model 30, which machine learning model is a machine learning model trained on interactions from a closed group of users of the end device other than the current user currently using the end device. As defined above, a closed group of users refers to a group of end device users with a fixed, unchanging number, where user rotation - defined as the possibility of joining or leaving the group - does not occur. User rotation is understood to mean the ability to join or leave a group. A closed group of users may be pre-selected from a larger pool of individuals or may be chosen from the pool of current end device users.

In a light behavioural analysis system such as the one shown in Figure 1, end user data is collected and stored on the end device 12, 12'. The user's interaction gallery is created and saved in the memory module 14 on the end device 12, 12', and the user's data is not sent outside this device. Consequently, the user's action history does not follow the user, meaning, for example, that launching the online banking application 10 on a new device 12 means that an immediate evaluation P of the user cannot be generated, as there is no available historical pattern (in this case, the interaction gallery only contains a single interaction record in the form of signals received from the sensors). A feature of this solution is that it restricts ability of identity verification solely to the user's device on which the user has previously logged in successfully at least once, meaning there exists an interaction gallery, and the interaction model 30 can detect a historical pattern that allows interactions to be classified as originating from the user or not. At the user's first interaction within the system or the first interaction using a new end device, the system will not provide an evaluation but will only record signals from the end device's sensors.

Every new login attempt by the user of the system, such as in online banking, through interaction with end device 12 is evaluated by the comparison module on the user's end device 12, meaning that the comparison module of the system according to the invention uses a universal machine learning model 30 that can effectively evaluate the user based solely on (i) their historical pattern and (ii) behaviour in the current session.

The similarity metrics or evaluation P of the user's interaction is sent to the control module 22 that manages the behavioural analysis process on the server software 20 side, which converts the evaluation P into a form P' understandable to the server system 24, such as an online banking system. The control module 22 also ensures the security of the entire operation, including detecting any manipulation attempts regarding the interaction gallery or comparison model, such as data replacement in the interaction gallery within memory module 14 or substitution of model 30. Traditional authentication techniques, such as hash functions, are used for this purpose.

In a light approach to behavioural analysis, due to the absence of training for individual models, it is essential to develop methods that allow user behaviour analysis to be conducted based solely on historical behaviour. A universal machine learning model 30, common to all users (in the context of a given modality), is helpful in such an assessment. Below there is a description of how the comparison module operates for a model configured for the modality of user login input.

Let us assume that the user has logged into the online banking system on a given end device ten times, each time entering the login. As a result, an interaction gallery consisting of ten numerical vectors is available on the end device - each vector represents the way of entering the login during a specific login session. When the user logs in for the eleventh time, an analysis of the way how the login input is conducted to confirm their identity based on historical entries. A vector representing the current method of entering the login is created and compared with the user's interaction gallery. To enhance the accuracy of comparing the pair - gallery and the vector representing the current login entry - a universal model is used, which takes this pair as input and returns a similarity metrics between the vector representing the current login method and historical logins.

The created model 30 knows how to compare data (vectors) within a specific domain (in this case, the login entry method). Importantly, it has been observed that this knowledge is universal, meaning that a model trained on training data from a closed set of reference users will also be effective in analysing the behaviour of users outside this set. Furthermore, this universality is not tied to a specific machine learning model, as this characteristic appears across various implementations of machine learning model 30 using different model classes.

In a preferred embodiment of the invention, the machine learning model 30 is developed in the following phases: (i) data collection phase: gathering data from a closed group of users in an isolated environment (e.g., recording interactions during user logins to online banking); (ii) phase of training the machine learning model using the collected data.

In a preferred embodiment, the analysis of user behaviour using model 30 involves comparing the user's 41 current interaction I with end device 12 against historical reference data G collected on the end device 12 during the user's previous interactions with this device.

The learning method and the machine learning model 30 used in one embodiment of the invention are described below.

The machine learning model 30 takes two vectors as input: the first represents the interaction history G, and the second represents the new interaction I, which it then compares. The result of this comparison is a scalar value, expressing the similarity metrics P of the new interaction I to the historical interactions in gallery G. This metrics P can be determined based on positive scale, indicating how similar the interaction and interaction gallery are, or on negative scale, indicating how dissimilar they are.

During training, the training set consists of positive and negative pairs. A positive pair comprises two vectors representing interactions of the same user performing the same task twice, while a negative pair comprises two vectors representing interactions of two different users performing the identical task.

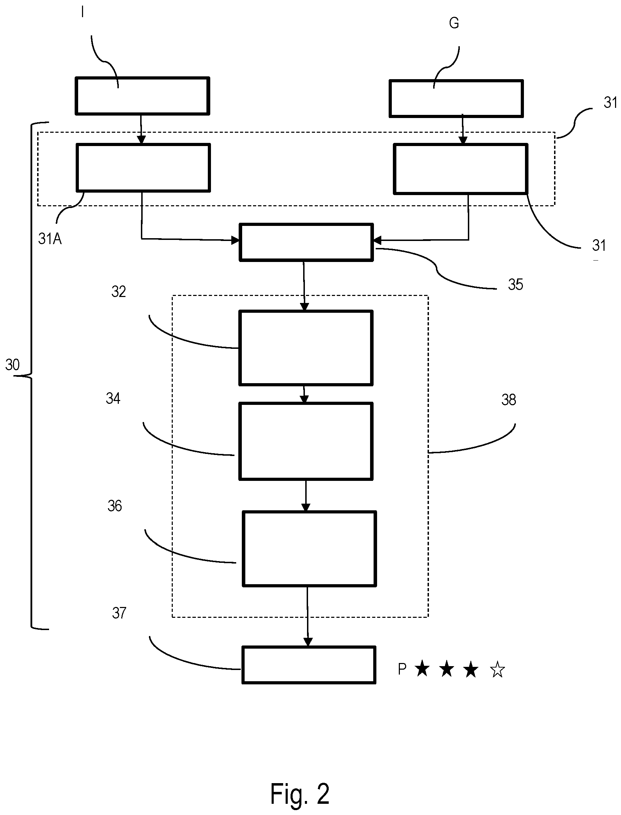

In one embodiment of the invention, the machine learning model 30 is selected from the class of models that includes an artificial neural network with a Siamese network architecture, as shown in Figure 2. This network consists of two identical branches 31A and 31B, known as "embedders" (with identical structure and weights), each comprising a single fully connected layer of 256 neurons with a ReLU (Rectified Linear Unit) activation function. Each embedder 31A and 31B takes one of the input vectors, representing the current interaction I of end user 41 and the historical interactions G of the same user 41, respectively. Siamese networks also contain a sub-network 38 that calculates the similarity metrics between the input vectors I and G based on the comparison of the outputs of the embedders 31A and 31B performed in block 35, where the comparison involves calculating the L1 norm between the outputs of embedders 31A and 31B. The sub-network 38 consists of three layers: an initial fully connected layer 32 with, for example, 256 neurons with a ReLU activation function; an intermediate fully connected layer 34 with 32 neurons with a ReLU activation function; and an output fully connected layer 36 with a single neuron and a sigmoid activation function, which generates the similarity metrics P.

The training process for the Siamese network involves maximising the similarity metrics between elements of positive pairs and minimising it between elements of negative pairs. The Binary Cross Entropy loss function is used in training the Siamese network.

Preferably the interactions of a closed group of users used for prior training of the machine learning model are recorded in an environment that separates the impact of the task or end device from the influence of the user's behavioural characteristics on the interaction with the device.

Preferably the input module receiving signals from the device's sensors during user interaction receives various signals from multiple sensors of the end device and creates a multimodal representation in the form of a data set generated from these sensor signals, with the pre-trained machine learning model being a multimodal model.

The isolated environment consists of at least one reference device (a laptop or a mobile device), optionally connected to peripheral devices/sensors (such as a keyboard or mouse), equipped with an application that allows data collection from sensors while the user performs successive tasks prompted by the application, such as entering a password. The peripheral devices used during selected tasks are intended to ensure high system performance when certain sensors are changed during system use by the user. During the tasks performed by users on the device, the system developers have full control over the device parameters and the tasks undertaken by users. Different users perform the same set of tasks to enable the comparison of interactions across users as they complete the same task (e.g., entering the same password).

The environment may consist of multiple devices that differ from one another. In such a configuration, the group should be as evenly distributed across the different devices as possible.

Preferably the set of user interactions responded to by the comparison module includes the user's current interaction and at least one previous interaction, and the comparison module generates a similarity metrics P between the user's 41 current interaction I and at least one previous interaction G of the user 41.

Preferably the pre-trained model, which responds to a set of user interactions, is protected from inspection or modification by camouflage mechanisms or source code encryption.

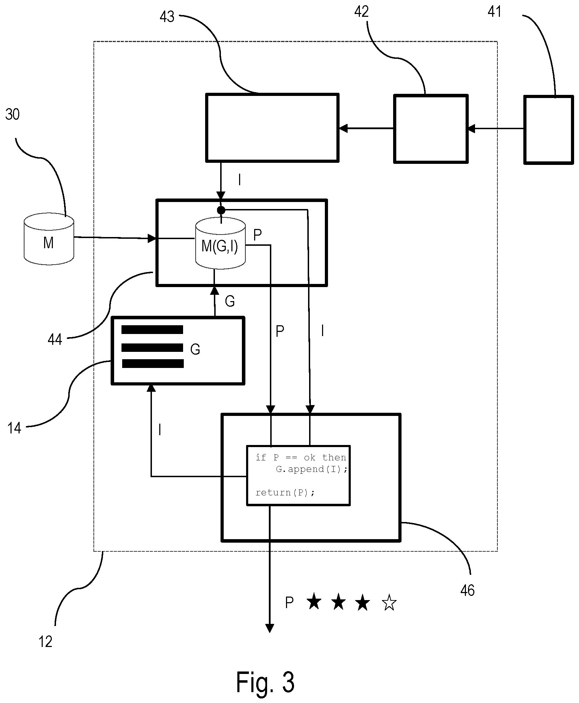

Figure 3 provides a schematic representation of the behavioural analysis method in a preferred embodiment of the invention. A method for behavioural analysis of user 41 behaviour in the form of user 41 interactions with the end device 12, comprising steps in which signals are received from the device's sensors 42 during user 41 interaction with the end device 12, the signals from the end device's 12 sensors 42 are recorded during user 41 interaction with the end device 12, the signals from the end device's 12 sensors 42 during user 41 interaction with the end device 12 are compared using a pre-trained machine learning model 30, and the response P from the comparison module 44 is provided. In the method according to the invention, the comparison module 44 uses a pre-trained machine learning model 30 that responds to a set of signals from the sensors 42 of the end device 12 during the interaction of the user 41 with the end device 12, as well as to historical interactions. Additionally, the comparison module 44 comprises a pre-trained machine learning model 30, which machine learning model is a machine learning model trained on interactions from a closed group of users of the end device other than the user currently using the end device 12.

As shown in Figure 3, the interaction of user 41 with device 12 causes the sensors 42 to record signals representing this behaviour in the input module 43. The input module then transmits the recorded interaction I of the user 41 to the comparison module 44. Using the received machine learning model 30, the comparison module 44 compares the current interaction I with a historical interaction G retrieved from the memory module 14. In one embodiment, the historical interaction G includes multiple historical interactions stored in the gallery within the memory module 14 and is represented in aggregated form. The response P from the comparison module 44, in the form of a similarity metrics between interactions I and G, is then transmitted to the output module 46, which provides the response P externally, particularly to the central system 20. In one embodiment, the output module can also accept data regarding the current interaction I; if the response P is positive, i.e. indicating high similarity or low dissimilarity between the interactions, the current interaction I is added to the interaction gallery G maintained in the memory module 14. The function for conditionally recording interaction I in gallery G in the memory module 14, depending on the response P, may be performed by the comparison module 44 or another independent module running on device 12.

Preferably, the steps of the method are carried out using the system according to the invention, with the user behaviour analysis system in the form of user interactions with the end device being run on the end device 12, 12'.

Preferably, the steps of the method according to the invention are executed by a computer programme containing instructions that, when run by a computer, cause the computer to perform the steps of the method.

## Claims

1. A system for behavioural analysis of user behaviour (41) in the form of user interactions (41) with an end device (12), comprising an input module (43) that receives signals from the sensors (42) of the end device (12) during the user's (41) interaction with the end device (12),
a memory module (14) that records signals from the sensors (42) of the device (12) during the user's (41) interaction with the end device (12),
a comparison module (44) that uses a pre-trained machine learning model (30), and
an output module (46) that provides the response from the comparison module (44),
**characterised in that**
the comparison module (44) uses a pre-trained machine learning model (30) that responds to a set of signals from the sensors (42) of the device (12) during the user's (41) interaction with the end device (12), representing at least two interactions (I, G) of the user (41) with the end device (12), to generate a response in the form of a similarity metrics (P) between at least two interactions (I, G); and furthermore,
the comparison module (44) contains a pre-trained machine learning model (30), which machine model (30) is a machine learning model trained on interactions originating from a closed group of end device users (12) other than the end user (41).

2. The system according to claim 1, **characterised in that** the interactions of the closed group of users used for pre-training the machine learning model (30) are recorded in an environment that separates the influence of the task or end device (12) from the influence of the user's behavioural characteristics on their interaction with the end device (12).

3. The system according to claim 1 or 2, **characterised in that** the input module (43) receiving signals from the sensors (42) of the end device (12) during the user's (41) interaction with the end device (12) receives multiple various signals from multiple sensors of the end device (12) and creates a multimodal representation in the form of a data set generated based on the signals from the end device's sensors, and the pre-trained machine learning model (30) is a multimodal model.

4. The system according to any of claims 1 to 3, **characterised in that** the set of user interactions to which the comparison module (44) responds includes the user's current interaction (I) and at least one previous interaction (G) of the user, and the comparison module (44) generates a similarity metrics (P) between the user's current interaction (I) and at least one previous interaction (G) of the end user (41).

5. The system according to any of claims 1 to 4, **characterised in that** the pre-trained machine learning model (30) responding to the set of user interactions is protected from inspection or modification through camouflage mechanisms or source code encryption.

6. The system according to any of claims 1 to 5, **characterised in that** the signals of the end user's (41) interactions with the end device (12) are in the form of data generated based on the signals from the sensors (42) of the end device (12).

7. The system according to any of claims 1 to 6, **characterised in that** the sensors (42) of the end device (12) are selected from a group comprising a keyboard, mouse, capacitive or resistive touchscreen, accelerometer, magnetometer, thermometer, capacitive sensors, and resistance sensor.

8. A method for behavioural analysis of user behaviour (41) in the form of user interactions with an end device (12), comprising the steps of:
receiving signals (I) from the sensors (42) of the end device (12) during the interaction of the user (41) with the end device (12),
recording signals (I) from the sensors (42) of the end device (12) during the interaction of the user (41) with the end device (12),
comparing, using a pre-trained machine learning model (30), the signals from the sensors of the device during the user's interaction with the end device, and
providing the response (P) from the comparison module (44),
**characterised in that**
the comparison module (44) uses a pre-trained machine learning model (30) that responds to a set of signals from the sensors (42) of the end device (12) during the user's (41) interaction with the end device (12), representing at least two interactions (I, G) of the user (41) with the end device (12), to generate a response in the form of a similarity metrics (P) between at least two interactions (I, G); and furthermore,
the comparison module (44) contains a pre-trained machine learning model (30), which machine model (30) is a machine learning model trained on interactions originating from a closed group of end device users (12) other than the end user (41).

9. The method for behavioural analysis of user behaviour according to claim 8, **characterised in that** the steps of the method are executed using the system according to any of claims 1 to 7, with the behavioural analysis system in the form of user (41) interactions with the end device (12) being run on the end device (12).

10. The method for behavioural analysis of user behaviour according to claim 8, **characterised in that** the steps of the method are executed using the system according to any of claims 1 to 7, with the behavioural analysis system in the form of user (41) interactions with the end device (12) being equipped with communication modules establishing a communication channel between the end device (12) and the central system (20), where:
the input module (43) receiving signals from the sensors (42) of the end device (12) during the interaction of the user (41) with the end device (12) or the memory module (44) recording signals from the sensors (42) of the end device (12) during the interaction of the user (41) with the end device (12) is run on the end device (12),
while the comparison module (44) is run on the central system (20); furthermore,
the input module (43) is adapted to transmit signals from the sensors (42) of the end device (12) during the interaction of the user (41) with the end device (12) to the central system (20), and the output module (46) is adapted to provide the response (P) from the comparison module (44) on the set of user interactions to the end device (12).

11. The method for behavioural analysis of user behaviour according to claim 8, **characterised in that** the steps of the method are executed using the system according to any of claims 1 to 7, with the behavioural analysis system in the form of user (41) interactions with the end device (12) is equipped with communication modules establishing a communication channel between the end device (12) and the central system (20), and
the input module (43) receiving signals from the sensors (42) of the end device (12) during the interaction of the user (41) with the end device (12), the memory module (43) recording signals from the sensors (42) of the end device (12) during the interaction of the user (41) with the end device (12), and the comparison module (44) are all run on the end device (12), whereas
the pre-trained machine learning model (30) used by the comparison module (44) is transmitted to the end device (12) from the central system (20) prior to the comparison module (44) being run in the process of behavioural analysis of the user (41).

12. A computer programme containing instructions which, when executed by a computer, cause the computer to perform the steps of the method according to any of claims 8 to 11.
